# EUROPEAN PATENT APPLICATION

(11) **EP 4 498 692 A1**
(43) Date of publication of application: **29.01.2025**
(21) Application number: 23774647.4
(22) Date of filing: 13.03.2023
(51) Int. Cl.: H04N 25/70

(54) **DATA GENERATION DEVICE, PROGRAM, DATA RECEPTION DEVICE, AND DATA STRUCTURE**

(30) Priority: 22.03.2022 JP 2022045687
(71) Applicant: Sony Semiconductor Solutions Corporation, Atsugi-shi, Kanagawa 243-0014 (JP)
(72) Inventor: WATANABE, Goshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/009619
(87) International publication number: WO 2023/182050

(57) **Abstract**

A data generation apparatus includes a reception part and a data generation part, the reception part receiving line data holding event data generated in reference to an event signal indicative of a result of detecting a change in an amount of received light as an event, and the data generation part generating output data regarding the received line data. The data generation part adds padding data to the output data regarding the line data with a data size smaller than a predetermined size, such that a data size of the output data reaches the predetermined size.

## Description

### [Technical Field]

The present technology relates to a data generation apparatus and a data structure for use by the data generation apparatus, the data generation apparatus generating output data based on line data of which a payload region holds event data generated by an event-driven image sensor.

### [Background Art]

It is very important for a downstream processing part to recognize the data amount of pixel data output from a pixel array part in each frame period.

PTL 1 cited below discloses a configuration permitting recognition of the data amount of pixel data by use of additional information such as Frame Start and Frame End.

### [Citation List]

### [Patent Literature]

[PTL 1]
Japanese Patent Laid-open No. 2012-120158

### [Summary]

### [Technical Problem]

Meanwhile, the event-driven image sensor is characterized by its indeterminate frequency of event signal generation leading to an indeterminate number of pieces of event data output in one frame period. With the configuration described in PTL 1, it is possible to recognize the end of a given frame but not the number of pieces of event data stored in last line data output at the end of that frame period because the number of pieces of event data stored in the last line data is indeterminate. In particular, in the case where padding data such as 0's and 1's is added in order to unify the data sizes of the line data, there is a problem of being unable to recognize the extent to which the data is effective.

The present technology has been devised in view of the above circumstances and aims to generate data allowing a downstream processing part to perform processing appropriately.

### [Solution to Problem]

A data generation apparatus according to the present technology includes a reception part configured to receive line data holding event data generated in reference to an event signal indicative of a result of detecting a change in an amount of received light as an event, and a data generation part configured to generate output data regarding the received line data. The data generation part adds padding data to the output data regarding the line data with a data size smaller than a predetermined size, such that a data size of the output data reaches the predetermined size.

This makes it possible to unify the data sizes of the payload regions in the pieces of line data output in one frame period.

A program according to the present technology is readable by a computer apparatus and causes it to implement functions including a reception function of receiving line data holding event data generated in reference to an event signal indicative of a result of detecting a change in an amount of received light as an event, and a data generation function of adding padding data to the line data with a data size smaller than a predetermined size, such that the line data reaches the predetermined size.

A data reception apparatus according to the present technology includes a data reception part configured to receive output data having a payload region holding event data generated in reference to an event signal indicative of a result of detecting a change in an amount of received light as an event and padding data such that a data size of the output data has a predetermined size.

A data structure according to the present technology is for use by a data reception apparatus and includes a data reception part configured to receive output data having a payload region holding event data generated in reference to an event signal indicative of a result of detecting a change in an amount of received light as an event and padding data such that a data size of the output data has a predetermined size. The data structure includes the event data and the padding data, and the data structure is used by the data reception apparatus in identifying the output data holding last event data indicative of a result of detecting a last event having occurred in one frame period.

### [Brief Description of Drawings]

[FIG. 1]

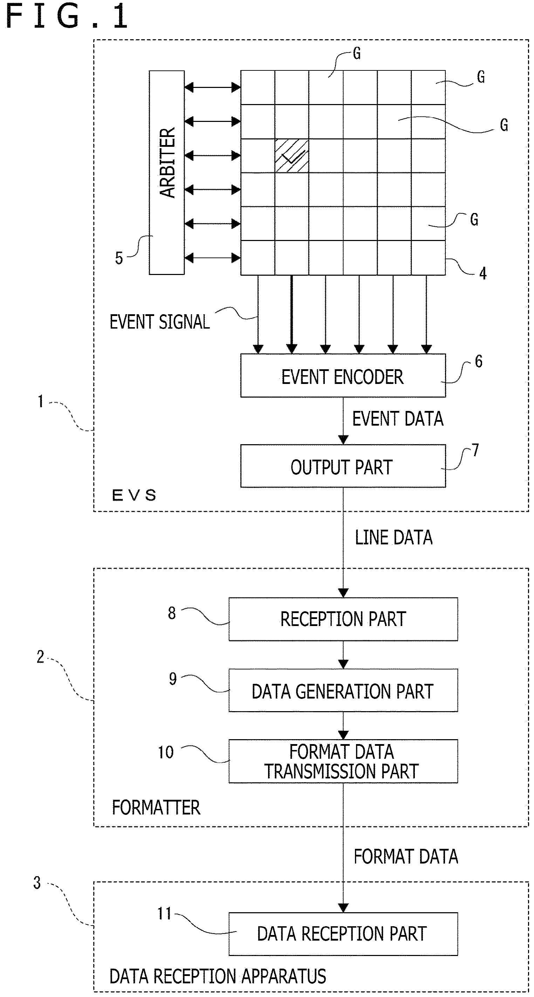

   FIG. 1 is a block diagram depicting a system configuration of the present technology.
[FIG. 2]

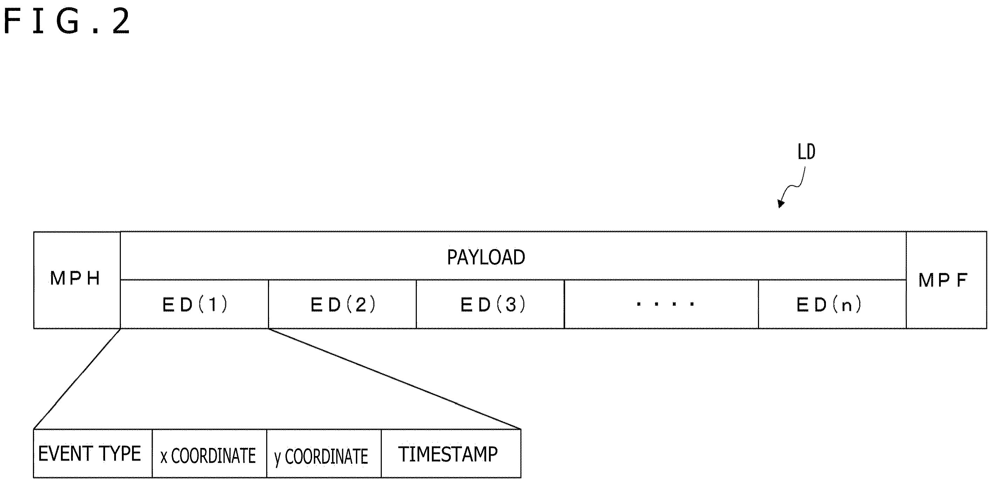

   FIG. 2 is a schematic view for explaining an exemplary data structure of line data.
[FIG. 3]

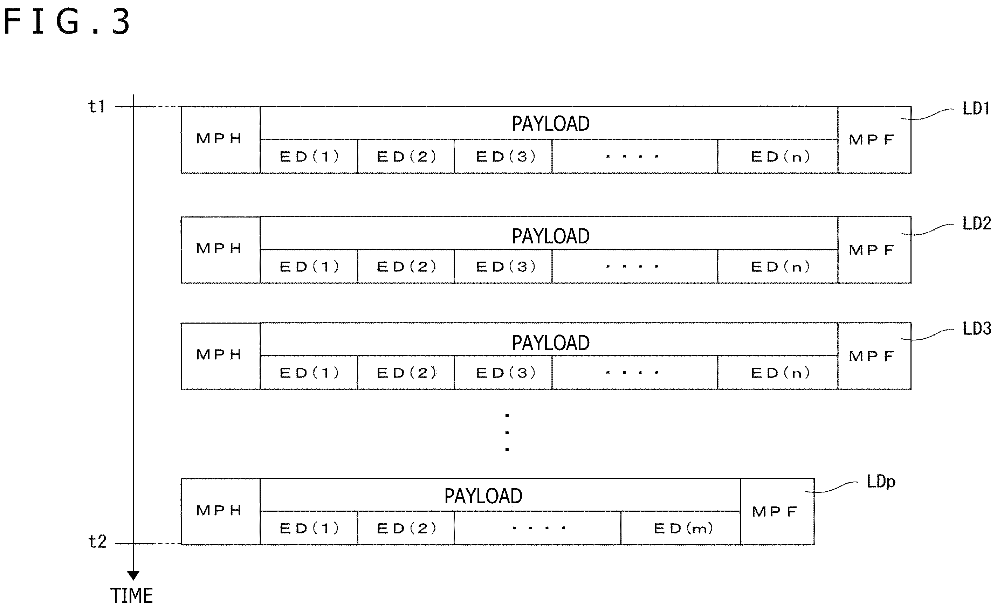

   FIG. 3 is a schematic view for explaining line data output from an EVS in one frame period.
[FIG. 4]

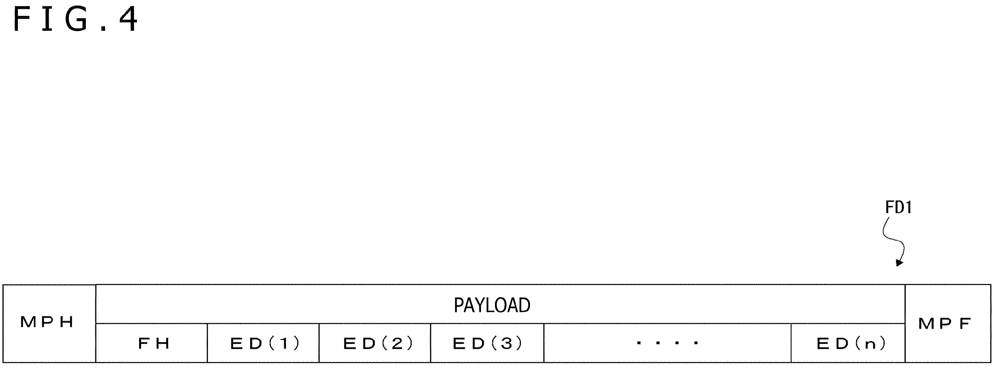

   FIG. 4 is a schematic view for explaining an exemplary data structure of format data output from a formatter.
[FIG. 5]

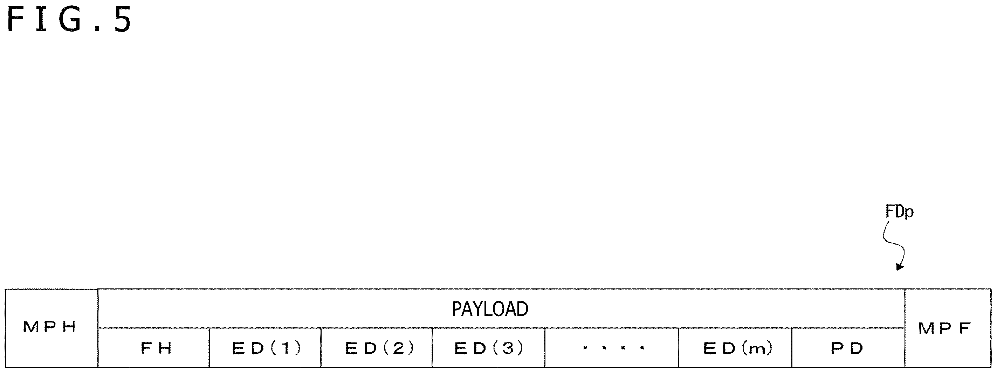

   FIG. 5 is a schematic view for explaining another exemplary data structure of the format data output from the formatter.
[FIG. 6]

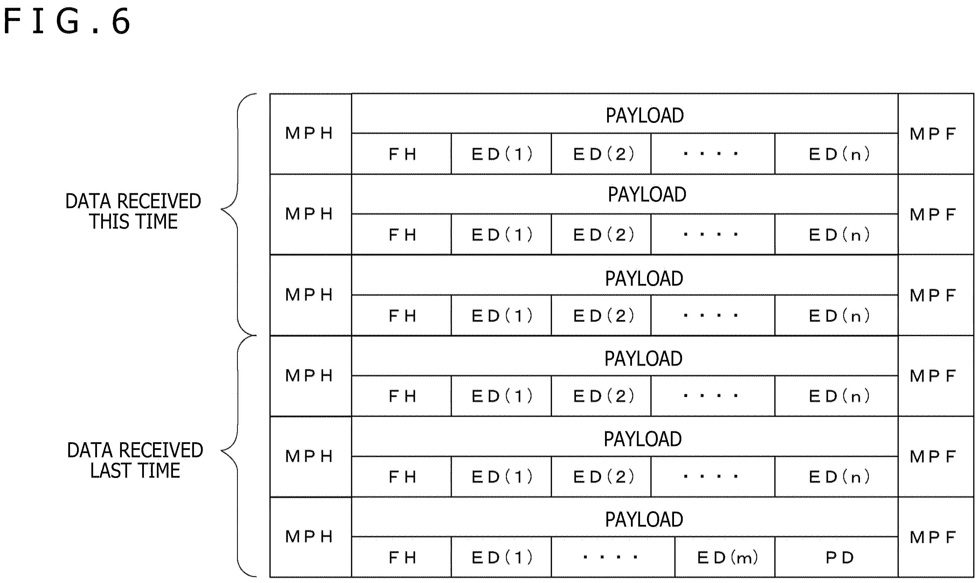

   FIG. 6 is a schematic view for explaining how a storage part of a data reception apparatus holds format data received in the preceding one frame period and format data received in the current one frame period.
[FIG. 7]

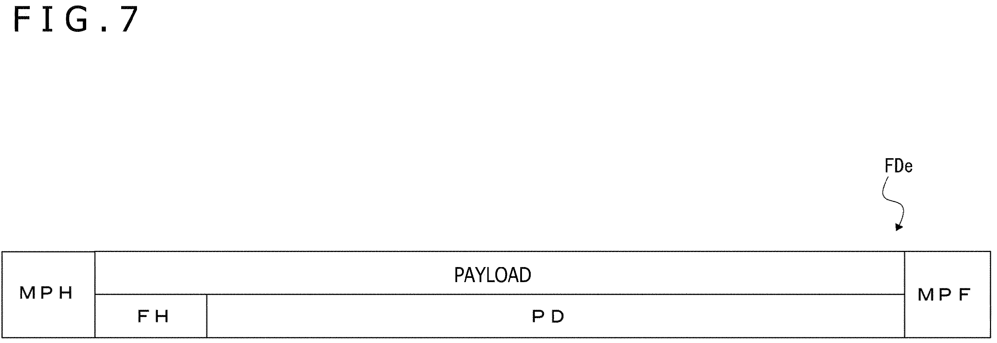

   FIG. 7 is a schematic view for explaining an exemplary data structure of the format data output from the formatter at the end of one frame period.
[FIG. 8]

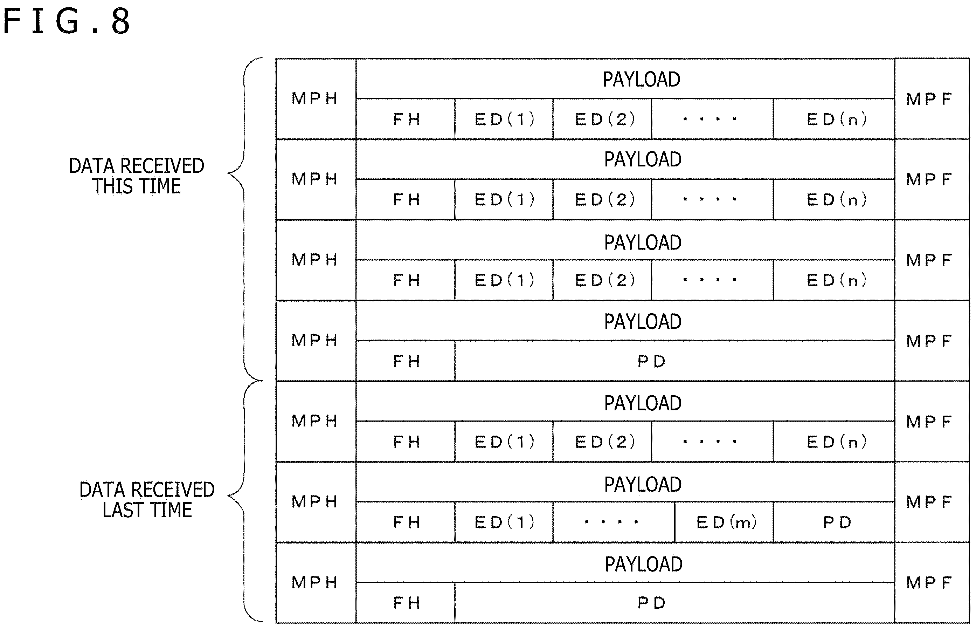

   FIG. 8 is a schematic view explaining how the storage part of the data reception apparatus holds format data received in the preceding one frame period and format data received in the current one frame period, thereby bringing about a state where existing problems are resolved.
[FIG. 9]

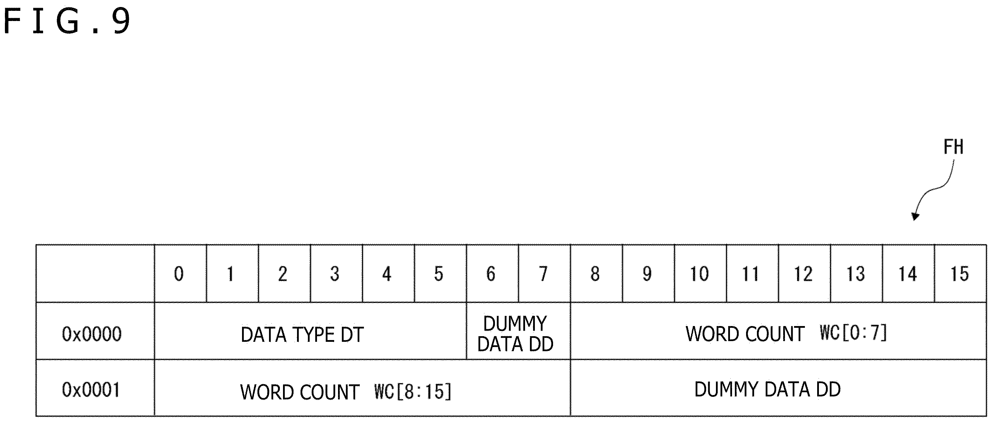

   FIG. 9 is a schematic view for explaining a first exemplary data structure of a formatter header.
[FIG. 10]

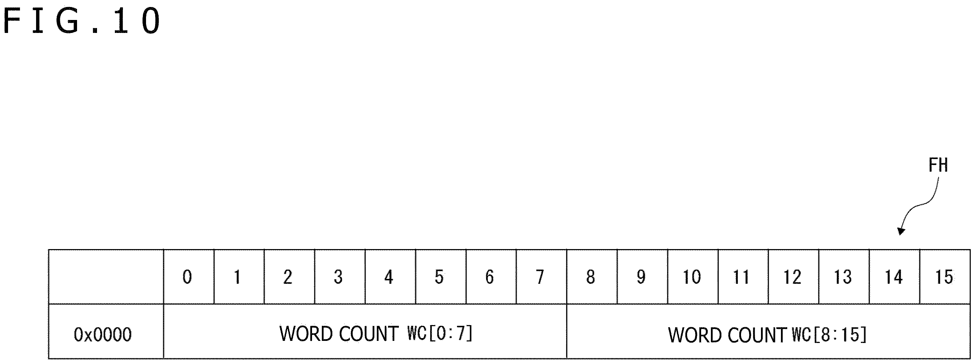

   FIG. 10 is a schematic view for explaining a second exemplary data structure of the formatter header.
[FIG. 11]

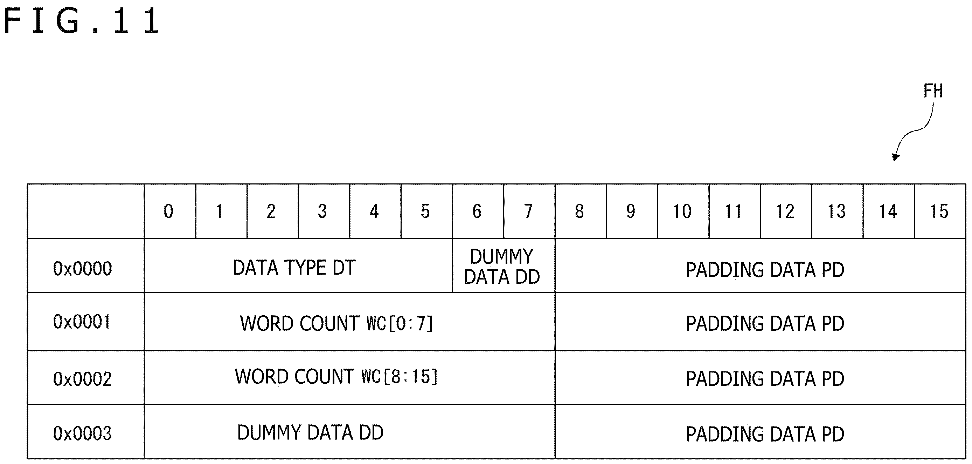

   FIG. 11 is a schematic view for explaining a third exemplary data structure of the formatter header.
[FIG. 12]

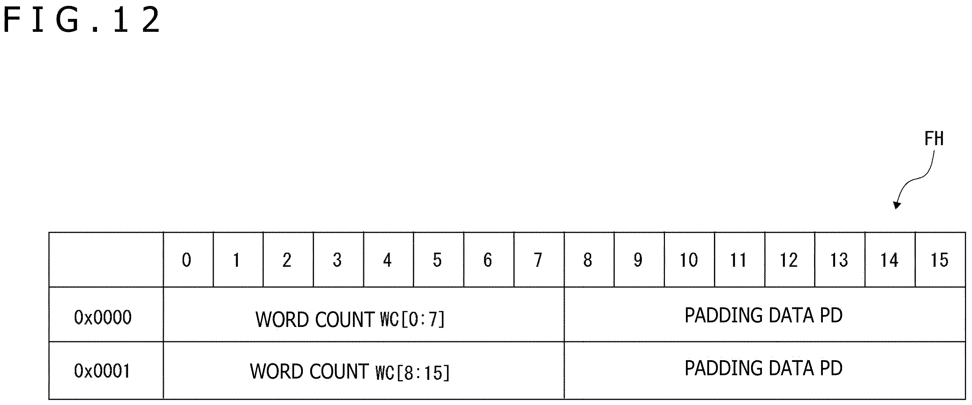

   FIG. 12 is a schematic view for explaining a fourth exemplary data structure of the formatter header.
[FIG. 13]

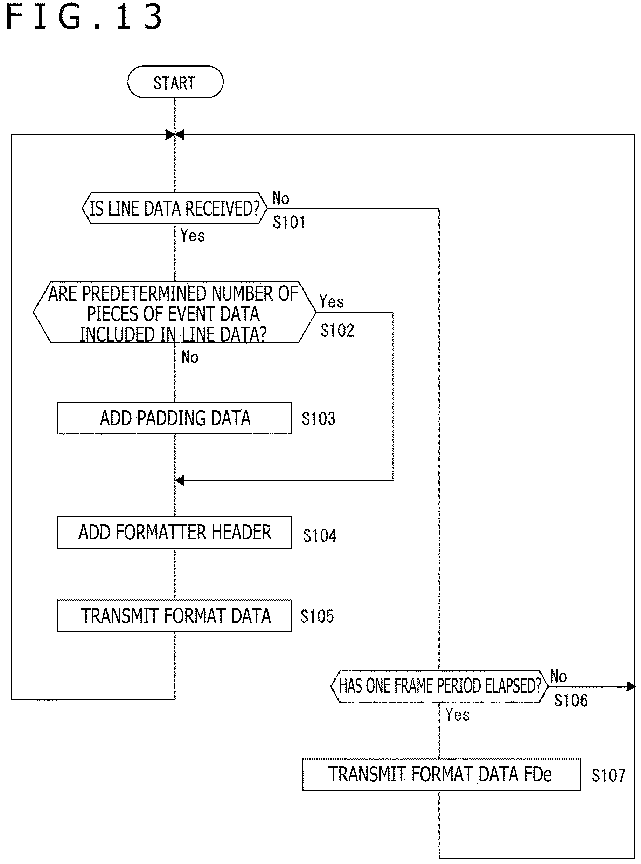

   FIG. 13 is a flowchart depicting an example of processing performed by the formatter in a first embodiment.
[FIG. 14]

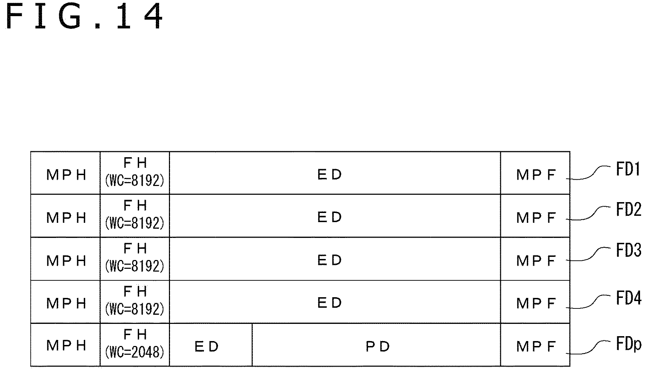

   FIG. 14 is a schematic view for explaining the format data to be output from the formatter in one frame period in a second embodiment.
[FIG. 15]

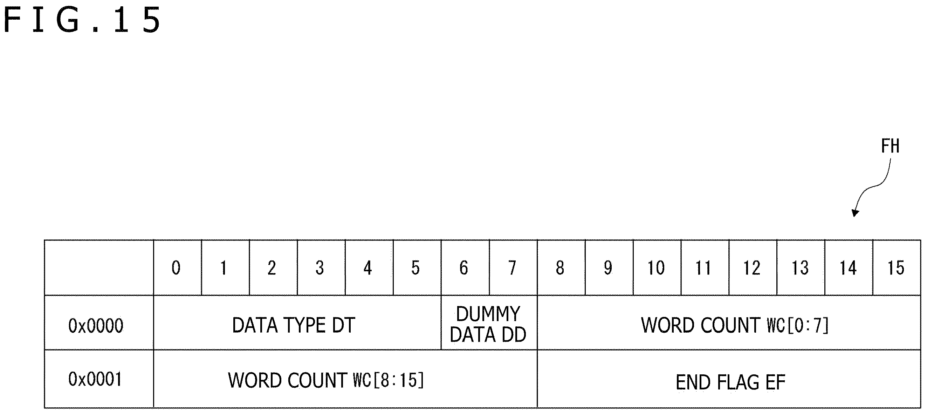

   FIG. 15 is a schematic view for explaining an exemplary data structure of a formatter header in the second embodiment.
[FIG. 16]

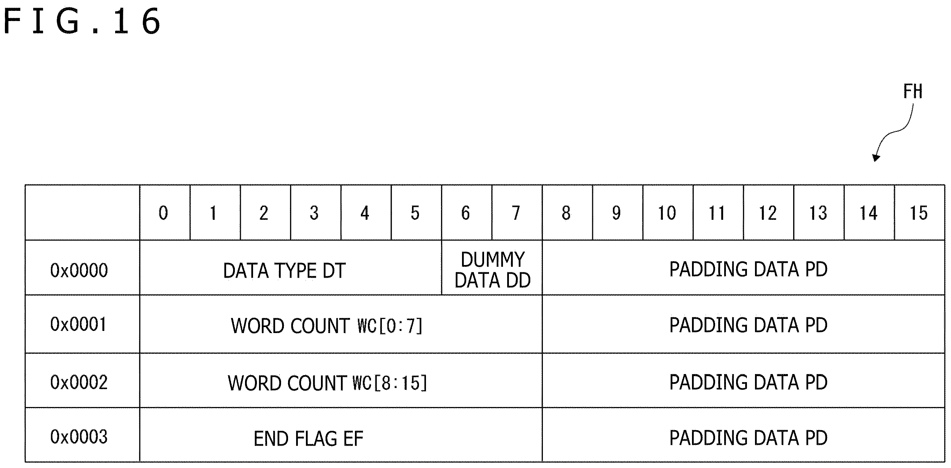

   FIG. 16 is a schematic view for explaining another exemplary data structure of the formatter header in the second embodiment.
[FIG. 17]

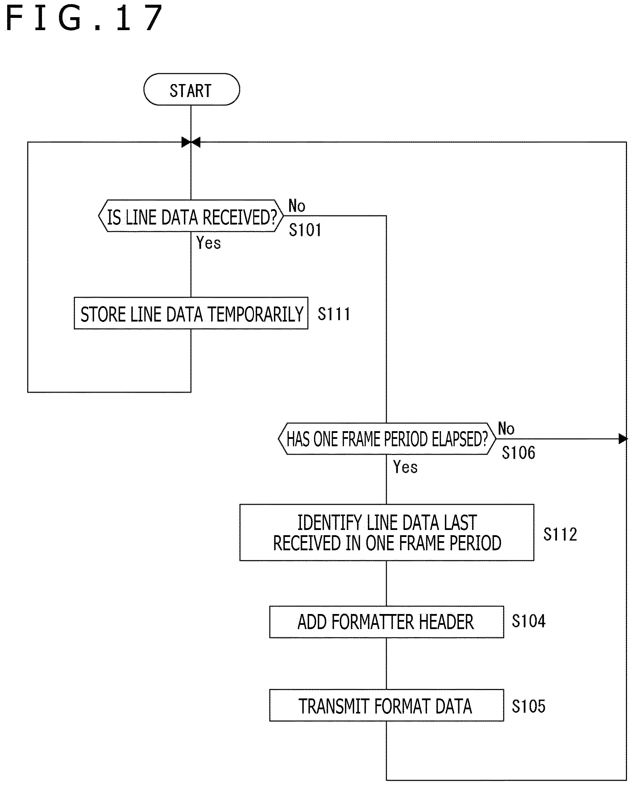

   FIG. 17 is a flowchart depicting another example of processing performed by the formatter in the second embodiment.
[FIG. 18]

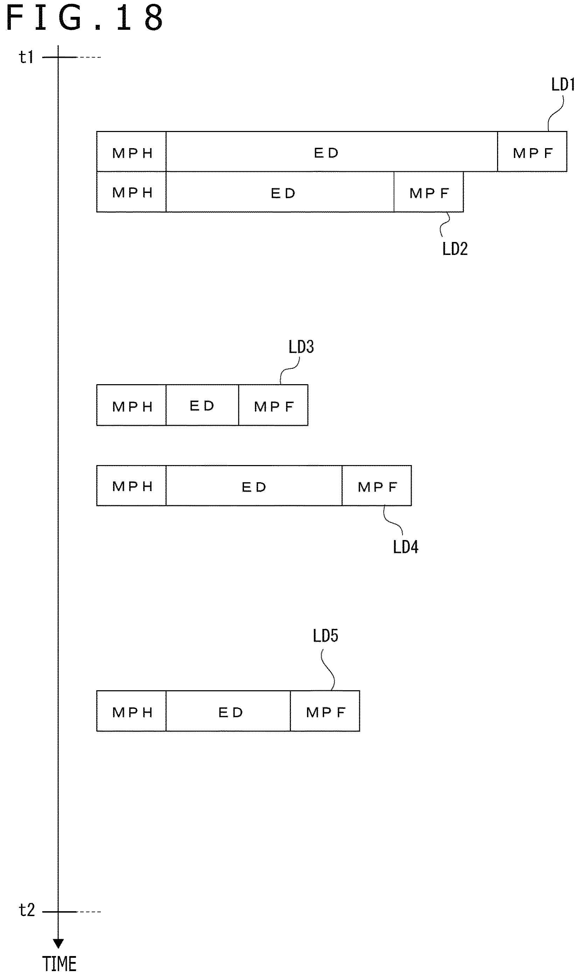

   FIG. 18 is a schematic view for explaining line data to be output from the EVS in one frame period in a third embodiment.
[FIG. 19]

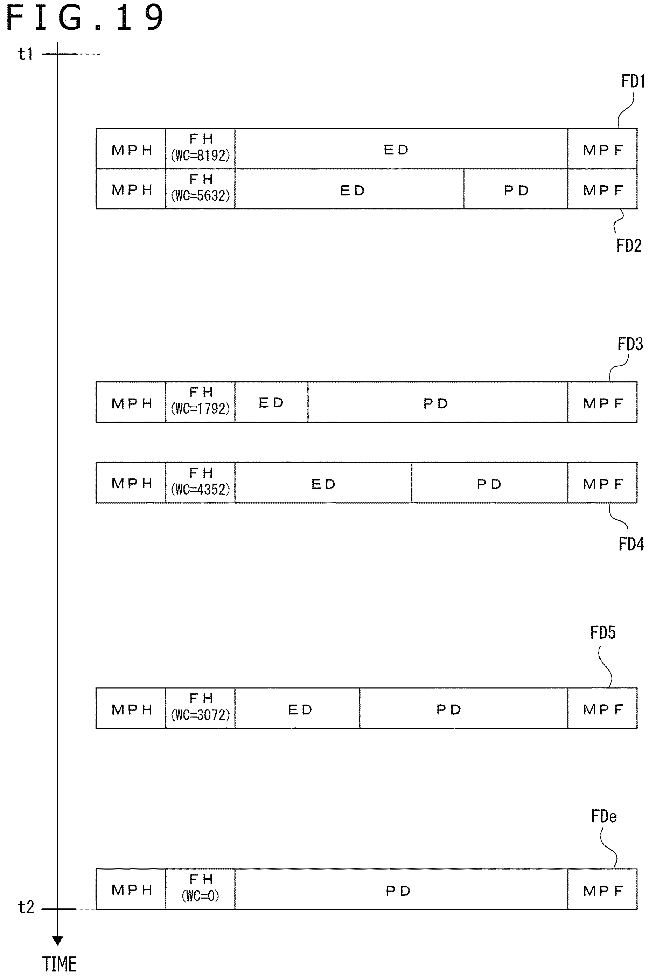

   FIG. 19 is a schematic view for explaining the format data to be output from the formatter in one frame period in the third embodiment.

### [Description of Embodiments]

Embodiments for implementing the present technology are described below in the following order, with reference to accompanying drawings.
<1. First embodiment>
   <1-1. System configuration>
   <1-2. Process flow>
<2. Second embodiment>
   <2-1. Data structure of format data>
   <2-2. Process flow>
<3. Third embodiment>
<4. Alternative examples>
<5. Conclusion>
<6. Present technology>

### <1. First embodiment>

### <1-1. System configuration>

A first embodiment to be described below involves generating output data in which a predetermined data format is applied to event data generated by an event-driven image sensor 1. The predetermined data format takes into account one characteristic of the event-driven image sensor 1, the characteristic being that the number of events detected per frame period is indeterminate. The data format is so made as to allow a downstream processing part to distinguish effective data from padding data including data of 0's and 1's.

FIG. 1 depicts an exemplary system that handles the above data format.

As depicted in FIG. 1, the system of the present embodiment includes the event-driven image sensor 1, a formatter 2, and a data reception apparatus 3.

In the description that follows, the event-driven image sensor 1 will be referred to as the EVS (Event-based Vision Sensor) 1.

The EVS 1 includes a pixel array part 4, an arbiter 5, an event encoder 6, and an output part 7.

The pixel array part 4 is formed by pixels G arrayed in a two-dimensional grid pattern. Each pixel G includes a photoelectric conversion element (such as a photodiode) and an event detection part, the photoelectric conversion element performing photoelectric conversion based on incident light to generate electrical charges, and the event detection part detecting an event according to a difference between a reference level and the level of a light reception signal.

The event detection part is capable of distinguishing between an ON event and an OFF event upon detection, the ON event being one in which the amount of received light increases by a predetermined amount or more, and the OFF event being one in which the amount of received light drops for a predetermined amount or more.

The arbiter 5 arbitrates requests from the pixels G in the pixel array part 4 and causes an event signal from the pixel G determined as a result of arbitration to be output to the event encoder 6.

The event encoder 6 generates event data ED in reference to the event signal output from the pixel G.

The event data ED includes at least an event type (ON event or OFF event), information identifying the position (x and y coordinates) of the pixel G where the event occurred, and timestamp information identifying the point in time at which the event occurred.

The event data ED generated by the event encoder 6 is output to the output part 7.

The output part 7 outputs data bundling multiple pieces of event data ED to the formatter 2. The data output by the output part 7 (e.g., EVS 1) will be referred to as "line data LD" hereunder.

Exemplary line data LD is depicted in FIG. 2. It is to be noted that explained here is an example of the line data LD output by the output part 7 according to MIPI (Mobile Industry Processor Interface) standards.

The line data LD has a data structure that includes a packet header (referred to as "MPH" hereunder), a payload region, and a packet footer (referred to as "MPF" hereunder).

The payload region holds multiple pieces of event data ED. Each piece of event data ED includes an even type, an x coordinate, a y coordinate, and timestamp information.

In this example, the maximum data size of the event data ED in the payload region is assumed to be 8,192 bytes. It is to be noted that this data size is merely an example.

The payload region of a single piece of line data LD can hold multiple pieces of event data ED. In the example depicted in FIG. 2, "n" pieces of event data ED(1), ED(2), ... ED(n) are stored in the payload region.

Whereas the event encoder 6 of the EVS 1 outputs multiple pieces of event data ED in one frame period, the number of pieces of event data ED is indeterminate. It follows that, generally, with regard to the line data LD output from the output part 7 in one frame period, following output of some pieces of line data LD of which the payload regions hold "n" pieces of event data ED each, a piece of line data LD of which the payload region holds fewer than "n" pieces (e.g., "m" pieces) of event data ED is output. This output of line data LD completes one frame period.

A specific example is depicted in FIG. 3.

Following start timing (time t1) of one frame period, pieces of line data LD1, LD2, LD3, ... of which the payload regions hold "n" pieces of event data ED each are output sequentially from the output part 7. It is to be noted, that since the output timing of the pieces of line data LD1, LD2, and LD3 is determined by the timing of event detection, the time interval between the line data outputs is not constant.

Thereafter, at the end timing (time t2), a piece of line data LDp of which the payload region holds "m" pieces of event data ED is output from the output part 7. At this time, the data size of the line data LDp is made smaller than that of the line data LD1, for example, by an amount reflecting a smaller number of pieces of event data ED stored in the payload region.

It is to be noted that the example of FIG. 3 is merely illustrative. In a case where the number of events detected in one frame period is small, a first piece of line data LD1 of which the payload region holds fewer than "n" pieces of event data ED may be output and this piece of line data LD1 may also be the last piece of line data LD output from the output part 7 in this one frame period.

In another case, the last piece of event data EDp output in one frame period may hold "n" pieces of event data ED in the payload region. In this case, the data sizes of all pieces of line data LD output from the output part 7 in this one frame period are the same.

The description returns to FIG. 1.

The formatter 2 includes an FPGA (Field Programmable Gate Array), for example. The formatter 2 includes a reception part 8, a data generation part 9, and a format data transmission part 10. The formatter 2 generates format data FD based on the received line data LD and outputs the generated format data FD.

The reception part 8 receives the line data LD and outputs the received line data LD to the data generation part 9.

The data generation part 9 generates format data FD based on the line data LD received from the reception part 8.

Some examples of the format data FD are explained below.

The format data FD is one in which header information added by the formatter 2 is stored in the payload region of line data LD. The header information (referred to as the format header FH hereunder) added by the formatter 2 complies with MIPI rules concerning the data to be stored in the payload region.

The payload region of the line data LD holds up to "n" pieces of event data ED. FIG. 4 illustrates format data FD1 generated based on line data LD that holds "n" pieces of event data ED.

The format data FD1 depicted in FIG. 4 is format data FD that corresponds to the pieces of line data LD1, LD2, and LD3 depicted in FIG. 3. The payload region holds a formatter header FH and "n" pieces of event data ED.

The formatter header FH at least holds information regarding the data size of the event data ED stored in the payload region. That is, the formatter header FH holds data size-related information indicating that "n" pieces of event data ED are stored in the payload region. The specifics of this feature will be discussed later.

Indicated next in FIG. 5 is format data FDp generated based on line data LD that holds "m" pieces of event data ED.

The format data FDp indicated in FIG. 5 corresponds to the line data LDp depicted in FIG 3. The payload region of the format data FDp holds a formatter header FH and "m" pieces of event data ED. In addition, in order to align the data size of the format data FDp with that of the format data FD1, for example, the data generation part 9 stores padding data PD into a data-free area in the payload region of the format data FDp. The padding data PD may be either 0's or 1's, for example.

The format header FH of the format data FDp holds information regarding the data size of the event data ED in a manner indicating that "m" pieces of event data ED are stored.

The description returns to FIG. 1.

The format data transmission part 10 of the formatter 2 transmits format data FD to the data reception apparatus 3 located downstream.

The data reception apparatus 3 includes a data reception part 11. The data reception part 11 transmits and receives the format data FD.

Here, the data reception apparatus 3 may include a storage region that temporarily holds all format data FD received from the formatter 2 in one frame period. Further, this storage region is reused for temporarily holding the format data FD to be received in the next one frame period.

At this time, it might happen that the storage region is not cleared upon reuse. The format data FDp transmitted from the formatter 2 at the end of one frame period may hold "n" pieces of line data LD, as discussed above. That is, there may be a case where "n" pieces of event data ED are stored in the payload regions of all format data FD received in this one frame period.

As depicted in FIG. 6, in the case where these pieces of format data FD are temporarily stored in a storage part of the data reception apparatus 3, the data reception apparatus 3 may acquire the stored format data FD, only to find it impossible to determine the last piece of format data FD received in the current one frame period. That is, there is a possibility that the pieces of format data FD received in the preceding one frame period might be processed as the format data FD received in the current one frame period.

In order to avoid such an eventuality, the data generation part 9 generates format data FDe excluding any event data ED as depicted in FIG. 7.

As illustrated, the payload region of the format data FDe holds only a formatter header FH and padding data PD.

The formatter header FH of the format data FDe holds information regarding the data size in a manner indicating that no event data ED is being stored.

The data size of the format data FDe coincides with that of the format data FD1 or FDp.

The format data FDe depicted in FIG. 7 may be said to be the last piece of output data in one frame period. FIG. 8 depicts how the format data FD is stored in the storage part of the data reception apparatus 3 when the format data FDe is output at the end of one frame period.

As depicted, storing the format data FD with no event data ED held in the payload region allows the data reception apparatus 3 to identify the format data FD received in one frame period.

Given below are some examples of the formatter header FH to be held in the payload region of the format data FD.

A first example of the formatter header FH is illustrated in FIG. 9. This is an example in which the data including a data type DT as 6-bit data and a word count WC as 2-byte data is stored in the formatter header FH. It is to be noted that dummy data DD is stored in the remaining area of the region.

The example in FIG. 9 is an example in which the formatter header FH is formed by 4 bytes and complies with the MPH (packet header) data format of the MIPI.

The data type DT is data that identifies the data type of the format data FD. For example, the data type DT holds information specifying that the data stored in the payload region of the format data FD complies with ROW 8 or ROW 10 standards.

The word count WC holds information regarding the data size (byte count) of the event data ED stored in the payload region of the format data FD. For example, in the case of the format data FD1 depicted in FIG. 4, a binary number "0010000000000000" representing "8,192" is stored as the word count WC. Further, in the case of the format data FDp depicted in FIG. 5, a binary number representing a value between "0" and "8,192" is stored as the word count WC. Further, in the case of the format data FDe depicted in FIG. 7, a binary number "0000000000000000" representing "0" is stored as the word count WC.

A second example of the formatter header FH is depicted in FIG. 10. This is an example in which the formatter header FH is formed by 2 bytes. What is stored here is only the word count WC as 2-byte data.

Compared with the first example, the second example has the formatter header FH formed in a smaller size, which contributes to data efficiency.

A third example of the formatter header FH is depicted in FIG. 11. This is an example in which the formatter header FH holds a data type DT in 6 bits and a word count WC in high-order 8 bits and low-order 8 bits constituting 2-byte data. This example provides a data format that supports cases subject to ROW 10 where data is handled in units of 2 bytes.

It is to be noted that the example depicted in FIG. 11, as with the example depicted in FIG. 9, complies with the MPH data format of the MIPI.

A fourth example of the formatter header FH is depicted in FIG. 12. This is an example in which the formatter header FH is formed by 4 bytes, with a word count WC in high-order 8 bits and low-order 8 bits constituting 2-byte data, which is only what is held in the formatter header FH. Compared with the third example, the data size of the formatter header FH is smaller, which contributes to data efficiency.

### <1-2. Process flow>

FIG. 13 depicts a flow of processing performed by an arithmetic processing part of the formatter 2 of the first embodiment.

In step S101, the arithmetic processing part of the formatter 2 determines whether or not line data LD is received from the output part 7.

In the case where line data LD is determined to have been received, the arithmetic processing part of the formatter 2 goes to step S102 and determines whether or not a predetermined number ("n" in the above examples) of pieces of event data ED are included in the received line data LD.

In the case where it is determined that the predetermined number of pieces of line data LD are not included in the event data ED, the arithmetic processing part of the formatter 2 goes to step S103 and adds padding data PD to the payload region to unify the data sizes of the payload regions.

It the case where it is determined in step S102 that the predetermined number of pieces of line data LD are included in the event data ED, the process of step S103 is not carried out.

In step S104, the arithmetic processing part of the formatter 2 adds a formatter header FH. Here, the formatter header FH holds as the word count WC information regarding the data size of the event data ED stored in the payload region.

In step S105, the arithmetic processing part of the formatter 2 transmits the format data FD to the data reception apparatus 3 located downstream, before returning to the process of step S101.

In the case where it is determined in step S101 that the line data LD is not received, the arithmetic processing part of the formatter 2 goes to step S106 and determines whether or not one frame period has elapsed. In the case where it is determined that one frame period has not elapsed yet, the arithmetic processing part of the formatter 2 returns to the process of step S101.

On the other hand, in the case where one frame period is determined to have elapsed, the arithmetic processing part of the formatter 2 goes to step S107 and transmits format data FDe to the data reception apparatus 3. As discussed above, the format data FDe is a piece of format data FD that holds only a formatter header FH and padding data PD in the payload region. As such, the format data FDe informs a downstream processing part that this piece of data completes the format data FD transmitted in one frame period.

### <2. Second embodiment>

### <2-1. Data structure of format data>

What makes a second embodiment different from the first embodiment is the format data FD output from the formatter 2.

The specifics of this feature are explained below with reference to the accompanying drawings.

FIG. 14 depicts format data FD transmitted from the formatter 2 to the data reception apparatus 3 in one frame period.

As illustrated, what is transmitted to the data reception apparatus 3 are pieces of format data FD1, FD2, FD3, and FD4 each holding only a formatter header FH and event data ED in the payload region and format data FDp holding a formatter header FH, event data ED, and padding data PD in the payload region.

Further, what makes the second embodiment different from the first embodiment is that the format data FDe holding only a formatter header FH and padding data PD in the payload region is neither generated by the formatter 2 nor transmitted to the data reception apparatus 3.

Here, FIG. 15 depicts the data configuration of a formatter header FH that solves the above-mentioned problem of being unable to identify the format data FD received in one frame period.

The formatter header FH holds data including a data type DT as 6-bit data, a word count WC at 2-byte data, and an end flag EF as 1-byte data.

The end flag EF is a flag that indicates whether or not this is the last format data FD generated at the end of one frame period.

Specifically, "1" is set in the end flag EF of the format data FD holding the event data ED regarding the last one of the events detected in one frame period. Further, the end flag EF in the other pieces of format data FD is set to "0." In the example of FIG. 14, "0" is set in the end flag EF of each of the pieces of format data FD1, FD2, FD3, and FD4, and "1" is set in the end flag EF of the format data FDp.

It is to be noted that a 1-bit data size is sufficient for the end flag EF. It follows that the end flag EF may be set to bit 6 or to bit 7 where dummy data DD is stored in a 1-byte data area in which the data type DT is stored.

FIG. 16 depicts another example of the formatter header FH in this embodiment.

The formatter header FH holds a data type DT in 6 bits, a word count WC in high-order 8 bits and low-order 8 bits constituting 2-byte data, and an end flag EF in 2 bytes. As in FIGS. 11 and 12, this example constitutes a data format that complies with ROW 10, for example, on handling data in units of 2 bytes.

It is to be noted that the formatter 2 temporarily places into the storage part the line data LD received from the output part 7 of the EVS 1 in one frame period. Further, the last one of the pieces of line data LD received during one frame period is identified, and the last piece of line data LD thus identified is set to "1" as the end flag EF.

### <2-2. Process flow>

FIG. 17 depicts a flow of processing performed by the arithmetic processing part of the formatter 2 of the second embodiment. It is to be noted that, in FIG. 17, the processes similar to those in FIG. 13 are designated by the same step numbers, and redundant explanations of these processes are omitted hereunder.

In step S101, the arithmetic processing part of the formatter 2 determines whether or not line data LD is received from the output part 7.

In the case where the line data LD is determined to have been received, the arithmetic processing part of the formatter 2 goes to step Sill and performs the process of temporarily storing the line data LD into the storage part. The line data LD stored here is retained until one frame period elapses.

On the other hand, in the case where it is determined in step S101 that the line data LD is not received, the arithmetic processing part of the formatter 2 goes to step S106 and determines whether or not one frame period has elapsed. In the case where it is determined that one frame period has not elapsed yet, the arithmetic processing part of the formatter 2 returns to the process of step S101.

On the other hand, in the case where one frame period is determined to have elapsed, the arithmetic processing part of the formatter 2 goes to step S112 and identifies the last piece of line data LD received during the one frame period. This process involves using the line data LD stored temporarily in the storage part of the formatter 2.

In step S104, the arithmetic processing part of the formatter 2 adds a formatter header FH. Here, the formatter header FH holds, as the word count WC, information regarding the data size of the event data ED held in the payload region.

Further, the end flag EF of the formatter header FH is set to "1" in the last piece of line data LD identified in step S112. Further, the end flag EF is set to "0" in the other pieces of line data LD.

In step S105, the arithmetic processing part of the formatter 2 transmits the format data FD to the data reception apparatus 3 located downstream, before returning to the process of step S101.

### <3. Third embodiment>

In a third embodiment, the output part 7 of the EVS 1 does not wait for a predetermined number of pieces of event data ED to be accumulated after the output from the event encoder 6. Instead, the output part 7 outputs each piece of line data LD as it arrives to the formatter 2 located downstream.

FIG. 18 depicts an example of line data LD output from the output part 7.

In the case where changes in the amount of received light are detected in numerous pixels G of the pixel array part 4 of the EVS 1 and where many pieces of event data ED are output from the event encoder 6 to the output part 7, the data size of the event data ED regarding the events detected in a substantially simultaneous manner exceeds 8,192 bytes, as exemplified by pieces of line data LD1 and LD2 in FIG. 18, so that these multiple pieces of line data LD are output sequentially from the output part 7.

On the other hand, in the case where changes in the amount of received light are detected in some pixels G of the pixel array part 4 of the EVS 1 and where the data size of all pieces of event data ED falls short of 8,192 bytes, the pieces of line data LD with their payload regions holding fewer than "n" pieces of event data ED each, such as pieces of line data LD3, LD4, and LD5 in FIG. 18, are output from the output part 7.

The formatter 2 that has received the line data LD generates format data FD corresponding to each piece of line data LD every time it is received, and transmits the generated piece of format data FD to the data reception apparatus 3 located downstream.

FIG. 19 depicts an example of format data FD generated and transmitted by the formatter 2.

A piece of format data FD1 is generated in correspondence to the piece of line data LD1. Similarly, a piece of format data FD2 is generated in correspondence to the piece of line data LD2; a piece of format data FD3 is generated in correspondence to the piece of line data LD3; a piece of format data FD4 is generated in correspondence to the piece of line data LD4; and a piece of format data FD5 is generated in correspondence to the piece of line data LD5.

The piece of format data FD1 of which the payload region holds "n" pieces of event data ED is generated, so that a formatter header FH is held in the payload region. At this time, a binary number representing "8,192" is set to the word count WC of the formatter header FH.

The pieces of format data FD2, FD3, FD4, and FD5 hold fewer than "n" pieces of event data ED in each of their payload regions. Thus, padding data PD is stored along with the formatter headers HF in the payload regions. In such a manner, the pieces of format data FD2, FD3, FD4, and FD5 are formatted to the same size of the piece of format data FD1.

It is to be noted that a binary number representing "5,632" is set to the word count WC of the piece of format data FD2; a binary number representing "1,792" is set to the word count WC of the piece of format data FD3; a binary number representing "4,352" is set to the word count WC of the piece of format data FD4; and a binary number representing "3,072" is set to the word count WC of the piece of format data FD5.

At time t2, which is the end timing of one frame period, format data FDe with its payload region excluding event data ED is generated and transmitted to the data reception apparatus 3 as in the case of the first embodiment. The value "0" is set to the word count WC of the format data FDe.

It is to be noted that, in this embodiment, the formatter 2 may not generate and transmit the format data FDe excluding any event data ED at the end of one frame period. Alternatively, as in the second embodiment, an end flag EF may be stored in the formatter header FH to solve the problem of being unable to identify the format data FD received during one frame period.

The processes performed by the arithmetic processing part of the formatter 2 of the third embodiment are similar to those indicated in FIG. 13 and thus will not be discussed further. It is to be noted that, in the first embodiment, the format data FD to which padding data PD is to be added in the process of step S103 could possibly be only the format data FD regarding the last piece of line data LD received from the output part 7 in one frame period.

In this embodiment, padding data PD is added in the case where the number of pieces of event data ED stored in the payload region falls short of a predetermined number (e.g., "n") regarding all pieces of format data FD based on the line data LD received from the output part 7 in one frame period.

### <4. Alternative examples>

Explained above in connection with the second embodiment has been the example in which the end flag EF is so used as to eliminate the need for generating the format data FDe of which the payload region includes no event data ED and is filled with padding data PD.

There are other alternative methods for not having to generate the format data FDe.

For example, the formatter 2 may accumulate all pieces of line data LD received in one frame period. At the end of one frame period, the formatter 2 calculates the data size (e.g., the word count WC) of the event data ED included in the received line data LD, stores information regarding the calculated data size of the event data ED in the formatter header FH of a first piece of format data FD to be transmitted in correspondence to this frame period to the data reception apparatus 3 located downstream, and transmits the first piece of format data FD along with the formatter header FH to the data reception apparatus 3 located downstream.

The data reception apparatus 3 located downstream verifies the formatter header FH in the first piece of format data FD received in one frame period, thereby recognizing the data size of the pieces of event data ED regarding the events detected in this one frame period. That is, the data reception apparatus 3 recognizes how much of the format data FD is to be received in this one frame period. This enables the data reception apparatus 3 to identify the last piece of event data ED to be received in one frame period.

The foregoing description has explained examples in which the formatter 2 is an apparatus apart from the EVS 1 and from the data reception apparatus 3. Alternatively, the formatter 2 may be formed integrally with the EVS 1 or included in the data reception apparatus 3.

For example, software for implementing the functions of the formatter 2 may be delivered to the data reception apparatus 3. With the software delivered, the functions for generating format data FD filled with padding data PD to make up for missing data are installed into the data reception apparatus 3 that is originally capable of receiving the line data LD of a predetermined size only.

This enables the data reception apparatus 3 to convert the received line data LD smaller than the predetermined size into format data FD with its payload region filled with padding data PD by using the newly installed functions. It thus becomes possible to resort to existing software processing.

### <5. Conclusion>

As explained with the examples above, the formatter 2 serving as the data generation apparatus includes the reception part 8 and the data generation part 9, the reception part 8 receiving line data LD holding event data ED generated on the basis of an event signal indicative of the result of detecting a change in the amount of received light as an event, and the data generation part 9 generating output data (format data FD) regarding the received line data LD. The data generation part 9 adds padding data PD to the output data regarding the line data LD with a data size smaller than a predetermined size, such that the line data LD reaches the predetermined data size.

It is thus possible to unify the data sizes of the payload regions of the pieces of line data LD output in one frame period.

Consequently, it becomes possible for a downstream processing part (e.g., a processing part of the data reception apparatus 3) capable of receiving only the data of a predetermined data size to receive data of other sizes. This in turn makes it possible to perform appropriate processing.

As explained above with reference to FIGS. 5, 7, and 9 through 12, the data generation part 9 of the formatter 2 serving as the data generation apparatus may generate output data (format data FD) by adding information (word count WC) regarding the data size of the event data ED included in the line data LD.

This allows the data reception apparatus 3 located downstream to accurately recognize the number of pieces of event data ED included in the format data FD even in the case where the number of pieces of event data ED included in the format data FD is smaller than "n."

As explained above with reference to FIGS. 5, 6, and 7, for example, the data generation part 9 of the formatter 2 serving as the data generation apparatus may store event data ED, padding data PD, and data size-related information (word count WC) into the payload region of the output data (format data FD).

For example, the format data FD generated by the data generation part 9 has an MIPI-compliant data structure. In this data structure, the payload region holds event data ED, padding data PD, and a formatter header FH that holds data size-related information (word count WC). This enables the data reception apparatus 3 located downstream to acquire the data size-related information held in the payload region by appropriating software for performing reception processing on MIPI data. That is, the appropriation of suitable software made possible by the data reception apparatus 3 contributes to reducing the workload and costs involved in development.

As explained above with reference to FIGS. 7 and 8, for example, the data generation part 9 of the formatter 2 serving as the data generation apparatus may generate last output data (format data FDe) to be output next to the output data (format data FD) regarding the line data LD holding last event data indicative of the result of detecting the last event having occurred in one frame period. The last output data may exclude the event data ED but include padding data PD.

This makes it possible to identify the format data FD received in one frame period, which allows the data reception apparatus 3 located downstream to perform suitable processing.

As explained above in connection with the third embodiment, the data size of the line data LD is indeterminate. The data generation part 9 of the formatter 2 serving as the data generation apparatus may thus generate output data (format data FD) by adding padding data PD to the line data other than the piece of line data holding the last event data indicative of the result of detecting the last event having occurred in one frame period.

This eliminates the need to wait for the format data FD to be generated until a predetermined number of pieces of event data ED have been accumulated. That is, every time the EVS 1 detects an event, it is possible to sequentially perform processes on the event data ED regarding the detected event, which permits high real-time performance.

As explained above with reference to FIGS. 9 and 11, for example, the data generation part 9 of the formatter 2 serving as the data generation apparatus may store data size-related information (word count WC) into payload regions by use of a structure complying with the data structure of the header region (MPH) according to the MIPI (Mobile Industry Processor Interface).

Specifically, the data structure of the formatter header FH added by the formatter 2 is made to comply with the MIPI. The compliance makes it possible to perform processes based on the appropriated MIPI-compliant software in retrieving data from the formatter header FH. With no need to develop dedicated software, the costs and workload involved in development can be reduced.

As explained above in connection with the second embodiment, the data generation part 9 of the formatter 2 serving as the data generation apparatus may generate output data (format data FD) by adding thereto last line flag information (end flag EF) indicating whether or not this is the piece of line data LD holding the last event data indicative of the result of detecting the last event having occurred in one frame period.

This makes it possible to identify the event data ED regarding the events detected in one frame period, without generating the format data PDe with the payload region excluding the event data ED and filled with padding data PD. As a result, the amount of data output from the formatter 2 is reduced, which improves the efficiency of data communication.

A program executed by the formatter 2 serving as the data generation apparatus is a computer-readable program for causing a computer apparatus to implement a reception function and a data generation function. The reception function involves receiving line data LD that holds event data ED generated in reference to an event signal indicative of the result of detecting a change in the amount of received light as an event. The data generation function involves adding padding data PD to the line data LD of which the data size is smaller than a predetermined size such that the line data LD reaches the predetermined data size.

Such a program includes the processes indicated in FIGS. 13 and 17. The program may be prerecorded, for example, on an HDD (Hard Disk Drive) as a recording medium built in equipment such as the computer apparatus, or in a ROM (Read Only Memory) or the like inside a microcomputer having a CPU (Central Processing Unit). Alternatively, the program may be stored (recorded) temporarily or permanently on a removable recording medium such as a flexible disk, a CD-ROM (Compact Disk Read Only Memory), an MO (Magneto Optical) disk, a DVD (Digital Versatile Disc), a Blu-ray Disc (registered trademark), a magnetic disk, a semiconductor memory, or a memory card. Such a removable recording medium may be offered as what is generally called packaged software.

Besides being installed into a personal computer or like equipment from the removable recording medium, such a program may also be downloaded from a download site over networks such as a LAN and the Internet.

The data reception apparatus 3 includes the data reception part 11 that receives the output data (format data FD) of which the payload region holds event data ED generated in reference to an event signal indicative of the result of detecting a change in the amount of received light as an event and padding data PD such that the format data FD reaches a predetermined size.

Receiving the format data FD having the data structure above allows the data reception apparatus 3 to perform suitable processes on the received data.

As discussed above, there is provided a data structure for use by the data reception apparatus 3 including the data reception part 11 that receives the output data (format data FD) of which the payload region holds the event data ED generated in reference to an event signal indicative of the result of detecting a change in the amount of received light as an event and padding data PD such that the format data FD reaches a predetermined size. The data structure includes the event data ED and padding data PD and is used by the data reception apparatus 3 in identifying the output data holding the last event data indicative of the result of detecting the last event having occurred in one frame period.

This makes it possible appropriately to recognize the event data ED received in one frame period and to carry out suitable processes accordingly.

It is to be noted that the advantageous effects stated in this description are only examples and are not limitative of the present technology; there may be additional advantageous effects.

Further, the examples above may be combined in any form. Any of such combinations, in a case of being used, can still provide the diverse advantageous effects described above.

### <6. Present technology>

The present technology can also take the following configurations.
(1) A data generation apparatus including:
   a reception part configured to receive line data holding event data generated in reference to an event signal indicative of a result of detecting a change in an amount of received light as an event; and
   a data generation part configured to generate output data regarding the received line data,
   in which the data generation part adds padding data to the output data regarding the line data with a data size smaller than a predetermined size, such that a data size of the output data reaches the predetermined size.
(2) The data generation apparatus according to (1) above, in which the data generation part generates the output data by adding information regarding a data size of the event data included in the line data.
(3) The data generation apparatus according to (2) above, in which the data generation part stores the event data, the padding data, and the information regarding the data size into a payload region of the output data.
(4) The data generation apparatus according to any one of (1) through (3) above, in which the data generation part generates last output data to be output next to the output data regarding line data holding last event data indicative of a result of detecting a last event having occurred in one frame period, and
   the last output data excludes the event data and includes the padding data.
(5) The data generation apparatus according to (4) above, in which the data size of the line data is indeterminate, and
   the data generation part generates the output data by also adding the padding data to line data other than the line data holding the last event data indicative of the result of detecting the last event having occurred in one frame period.
(6) The data generation apparatus according to (3) above, in which the data generation part stores the information regarding the data size into the payload region by use of a structure complying with a data structure of a header region according to MIPI (Mobile Industry Processor Interface).
(7) The data generation apparatus according to any one of (1) through (6) above, in which the data generation part generates the output data by adding thereto last line flag information indicating whether or not the output data is a piece of line data holding last event data indicative of a result of detecting a last event having occurred in one frame period.
(8) A program readable by a computer apparatus, the program causing the computer apparatus to implement functions including:
   a reception function of receiving line data holding event data generated in reference to an event signal indicative of a result of detecting a change in an amount of received light as an event; and
   a data generation function of adding padding data to the line data with a data size smaller than a predetermined size, such that the data size of the line data reaches the predetermined size.
(9) A data reception apparatus including:
   a data reception part configured to receive output data having a payload region holding event data generated in reference to an event signal indicative of a result of detecting a change in an amount of received light as an event and padding data such that a data size of the output data has a predetermined size.
(10) A data structure for use by a data reception apparatus including a data reception part configured to receive output data having a payload region holding event data generated in reference to an event signal indicative of a result of detecting a change in an amount of received light as an event and padding data such that a data size of the output data has a predetermined size,
   in which the data structure includes the event data and the padding data, and
   the data structure is used by the data reception apparatus in identifying the output data holding last event data indicative of a result of detecting a last event having occurred in one frame period.

### [Reference Signs List]

2: Formatter (data generation apparatus)
3: Data reception apparatus
8: Reception part
9: Data generation part
11: Data reception part
LD, LD1, LD2, LD3, LD4, LD5: Line data
FD, FD1, FD2, FD3, FD4, FD5, FDm, FDn, FDe: Format data (output data)
ED: Event data
PD: Padding data

## Claims

1. A data generation apparatus comprising:
a reception part configured to receive line data holding event data generated in reference to an event signal indicative of a result of detecting a change in an amount of received light as an event; and
a data generation part configured to generate output data regarding the received line data,
wherein the data generation part adds padding data to the output data regarding the line data with a data size smaller than a predetermined size, such that a data size of the output data reaches the predetermined size.

2. The data generation apparatus according to claim 1, wherein the data generation part generates the output data by adding information regarding a data size of the event data included in the line data.

3. The data generation apparatus according to claim 2, wherein the data generation part stores the event data, the padding data, and the information regarding the data size into a payload region of the output data.

4. The data generation apparatus according to claim 1, wherein the data generation part generates last output data to be output next to the output data regarding line data holding last event data indicative of a result of detecting a last event having occurred in one frame period, and
the last output data excludes the event data and includes the padding data.

5. The data generation apparatus according to claim 4, wherein the data size of the line data is indeterminate, and
the data generation part generates the output data by also adding the padding data to line data other than the line data holding the last event data indicative of the result of detecting the last event having occurred in one frame period.

6. The data generation apparatus according to claim 3, wherein the data generation part stores the information regarding the data size into the payload region by use of a structure complying with a data structure of a header region according to MIPI (Mobile Industry Processor Interface).

7. The data generation apparatus according to claim 1, wherein the data generation part generates the output data by adding thereto last line flag information indicating whether or not the output data is a piece of line data holding last event data indicative of a result of detecting a last event having occurred in one frame period.

8. A program readable by a computer apparatus, the program causing the computer apparatus to implement functions comprising:
a reception function of receiving line data holding event data generated in reference to an event signal indicative of a result of detecting a change in an amount of received light as an event; and
a data generation function of adding padding data to the line data with a data size smaller than a predetermined size, such that the data size of the line data reaches the predetermined size.

9. A data reception apparatus comprising:
a data reception part configured to receive output data having a payload region holding event data generated in reference to an event signal indicative of a result of detecting a change in an amount of received light as an event and padding data such that a data size of the output data has a predetermined size.

10. A data structure for use by a data reception apparatus including a data reception part configured to receive output data having a payload region holding event data generated in reference to an event signal indicative of a result of detecting a change in an amount of received light as an event and padding data such that a data size of the output data has a predetermined size,
wherein the data structure includes the event data and the padding data, and
the data structure is used by the data reception apparatus in identifying the output data holding last event data indicative of a result of detecting a last event having occurred in one frame period.
